# EUROPÄISCHE PATENTSCHRIFT

(11) **EP 3 628 167 B1**
(45) Veröffentlichungstag und Bekanntmachung des Hinweises auf die Patenterteilung: **26.10.2022**
(21) Anmeldenummer: 19196638.1
(22) Anmeldetag: 11.09.2019
(51) Int. Cl.: A23G 3/34, A23G 3/28

(54) **DEKORIERSPALT**
COATING APPARATUS WITH GAP
APPAREIL D´ENROBAGE AVEC FENTE

(30) Priorität: 14.09.2018 DE 102018215652
(43) Veröffentlichungstag der Anmeldung: 01.04.2020
(73) Patentinhaber: Bühler GmbH, 74211 Leingarten (DE)
(72) Erfinder: HILTSCHER, Markus, 22339 Hamburg (DE)
(74) Vertreter: Vossius & Partner Patentanwälte Rechtsanwälte mbB

(56) Entgegenhaltungen:
- EP-A1- 0 632 962
- EP-A1- 1 498 037
- EP-A1- 1 582 100
- BE-A- 334 586

## Beschreibung

Die Erfindung betrifft eine Vorrichtung und ein Verfahren zum Dekorieren eines mit einer ersten fließfähigen Masse überzogenen Produkts mit einer zweiten fließfähigen Masse, insbesondere zum Vermeiden einer Vermischung der Massen miteinander in einem Auffangtrog.

Eine Vorrichtung zum Überziehen von Produkten, insbesondere Lebensmittelprodukten, mit einer fließfähigen Überzugsmasse ist beispielsweise aus der DE 10 2013 001 743 A1 bekannt.

Die EP 1 498 037 A1 offenbart ein Verfahren und eine Vorrichtung zum einseitigen Überziehen von Süßwarenkörpern mit Überzugsmasse.

Bei der Produktion von Pralinen, Süßwaren, Gebäck o.ä. wird oftmals zusätzlich zu einer Überzugsmasse eine Dekoriermasse aufgebracht. Die Produkte werden dabei auf einem Transportband, beispielsweise einem durchlässigen Gitterband, transportiert und zunächst mit der Überzugsmasse und im Folgenden mit der Dekoriermasse überzogen. Überzug und Dekoriermasse können bspw. Schokolade sein. Dies kann "nass in nass", d.h. vor dem vollständigen Trocknen der Überzugsmasse, geschehen. Überschüssige Masse sowohl der Überzugs-, als auch der Dekoriermasse werden unterhalb des Gitterbands in einem Trog aufgefangen und rezirkuliert. Besonders bei unterschiedlichen Farben der Massen kommt es im Laufe der Produktion zur Kontamination und Verfärbung der Überzugsmasse, da sich diese im Trog bzw. Auffangbehälter mit der Dekoriermasse mischt. Falls ein separater Trog für die Dekoriermasse vorgesehen ist, kommt es dort zur Vermischung der Dekoriermasse mit herabtropfender Überzugsmasse. Dies zieht die Notwendigkeit des vollständigen Austauschs der Masse und Reinigung der Maschine nach sich. Dieser Vorgang verursacht hohe Kosten und ist zeitaufwendig.

Somit besteht die Aufgabe der Erfindung darin, eine Vorrichtung bereitzustellen, die es ermöglicht, die überschüssige und abgetropfte Dekoriermasse getrennt von der Überzugsmasse aufzufangen, um eine Kontamination und Vermischung der Massen zu verhindern.

Die Erfindung betrifft eine Vorrichtung zur Herstellung von Lebensmittelprodukten, insbesondere von Süßwaren, Gebäck oder Pralinen, und insbesondere eine Vorrichtung zum Überziehen von Produkten mit mindestens zwei fließfähigen Massen. Hierfür wird gemäß einer Ausführungsform der Erfindung ein bereits mit einer ersten fließfähigen Masse überzogenes Produkt auf einem Transportband transportiert und mittels einer (Dekorier-) Einheit zum Verteilen einer zweiten fließfähigen Masse, einer Dekoriermasse oder Dekormasse, die zweite fließfähige Masse auf das Produkt aufgebracht. Als Transportband kann insbesondere ein Gitterband zum Einsatz kommen. Das Produkt kann mittels einer in Produktionsrichtung vorher angeordneten weiteren Einheit zum Verteilen der ersten fließfähigen Masse, auch Überzugsmasse genannt, überzogen werden, bevor auf das bereits überzogene Produkt mittels der Dekoriereinheit die zweite fließfähige Masse aufgetragen wird. Die fließfähigen Massen sind beispielhaft fetthaltige Massen, es können allerdings auch andere Massen für Überzug und Dekor verwendet werden. Unterhalb der Dekoriereinheit ist ein Auffangbehälter oder ein Trog angebracht, um die überschüssige Dekoriermasse aufzufangen. Zur Führung des Transportbands sind mehrere Umlenkeinrichtungen vorgesehen. Durch zwei obere Umlenkeinrichtungen wird das Transportband im Bereich der Dekoriereinheit derart umgelenkt, dass ein Spalt zwischen diesen zwei oberen Umlenkpunkten des Transportbands oberhalb des zweiten Trogs für die Dekoriermasse ausgebildet wird. Erfindungsgemäß wird das Transportband insbesondere mit Hilfe der Umlenkeinrichtungen um den Trog herumgeführt werden, wobei durch zwei der Umlenkeinrichtungen, nämlich den oberen Umlenkeinrichtungen, die sich auf einer Höhe zwischen der Dekoriereinheit und dem Trog befinden, der Spalt gebildet wird. Durch weitere Umlenkeinrichtungen kann das Transportband dann derart um den Trog herum geführt werden, so dass der Weg des Transportbands unterhalb des Trogs verläuft und überschüssige Überzugs- und/oder Dekoriermasse, die sich auf dem Transportband befindet, nicht in den Trog tropfen kann. Die Spaltgröße ist dabei einstellbar. Dadurch, dass die Dekoriermasse über dem Spalt auf dem Produkt verteilt wird, tropft die überschüssige Dekoriermasse in den Trog und gelangt nicht auf das Transportband. Somit vermischt sich die Dekoriermasse nicht mit der Überzugsmasse. Weiterhin kann unterhalb des Transportbands, insbesondere in dem Bereich, in dem das Produkt mit der Überzugsmasse überzogen wird, also stromaufwärts der Dekoriereinheit, ein Auffangbehälter für überschüssige Überzugsmasse angebracht sein, in dem die herabtropfende Überzugsmasse gesammelt und rezirkuliert wird.

Insbesondere ist die Erfindung auf eine Vorrichtung und ein Verfahren zum Dekorieren von mit einer ersten fließfähigen Masse überzogenen Produkten mit mindestens einer zweiten fließfähigen Masse gerichtet. Die Vorrichtung kann insbesondere in einer Überziehmaschine angeordnet sein. Die Vorrichtung weist ein Transportband zum Transport der Produkte, eine Einheit zum Verteilen der zweiten fließfähigen Masse auf den Produkten und einen Auffangbehälter für die zweite fließfähige Masse, der unterhalb der Einheit zum Verteilen der zweiten fließfähigen Masse angeordnet ist, auf. Das Transportband wird mittels mehrerer Umlenkeinrichtungen, also insbesondere Umlenkprofilen bzw. Umlenkrollen, im Bereich des Auffangbehälters geführt und wird um den Auffangbehälter herum gelenkt. Zwischen zwei oberen Umlenkeinrichtungen der mehreren Umlenkeinrichungen des Transportbands wird ein verstellbarer Spalt ausgebildet. Die abhängigen Ansprüche beschreiben Ausführungsformen der Erfindung.

Die vorliegende Erfindung wird anhand der Zeichnungen verdeutlicht. Es zeigen:
Fig. 1 eine Seitenansicht der Vorrichtung zum Dekorieren gemäß einer Ausfiihrungsform der Erfindung,
Fig. 2 eine Perspektivansicht der Vorrichtung gemäß Fig. 1 mit optionaler Spalteinstellung,
Fig. 3 eine Perspektivansicht der Vorrichtung gemäß Fig. 1 mit geöffnetem Spalt,
Fig. 4 eine Perspektivansicht der Vorrichtung gemäß Fig. 1 mit geöffnetem Spalt,
Fig. 5 eine Perspektivansicht der Vorrichtung gemäß Fig. 1 mit geöffnetem Spalt,
Fig. 6 eine schematische Seitenansicht der Vorrichtung gemäß Fig. 1,
Fig. 7 eine schematische Seitenansicht der Vorrichtung gemäß Fig. 1 und
Fig. 8 eine schematische Ansicht einer Vorrichtung zum Überziehen und Dekorieren von Lebensmittelprodukten.

Im Folgenden bezeichnen gleiche Bezugszeichen, sofern nicht anders spezifiziert, gleiche oder ähnliche Elemente.

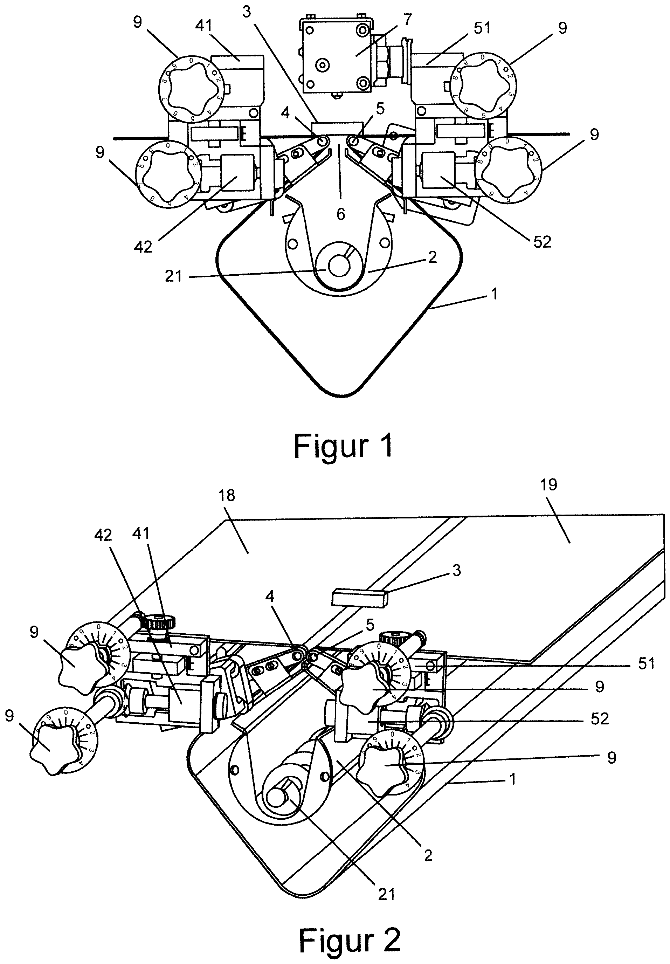

Fig. 1 zeigt einen Ausschnitt der Vorrichtung zum Dekorieren gemäß einer Ausführungsform der Erfindung mit Spalteinstellung. Die bereits überzogenen Produkte 3 werden auf einem Gitterband 1 transportiert. Anstelle eines Gitterbands 1 kann auch ein anderes durchlässiges Transportmedium, beispielsweise ein Plastikband, verwendet werden. Unterhalb der Dekoriervorrichtung 7 ist ein Auffangbehälter 2 oder Auffangtrog angebracht. Im Auffangtrog 2 ist eine Austragschnecke 21 angeordnet, die überschüssige Dekoriermasse aus dem Auffangtrog 2 befördert, damit sie rezirkuliert und zur Dekoriervorrichtung 7 transportiert werden kann. Die Austragschnecke 21 kann auch durch andere Beförderungsmittel oder eine Neigung des Auffangtrogs 2 ohne zusätzliche Hilfsmittel ersetzt werden.

Um zu verhindern, dass Überzugsmasse und Dekoriermasse miteinander vermengt werden, wird das Gitterband 1 gemäß Fig. 1 mittels Umlenkprofilen bzw. -rollen um den Auffangtrog 2 herumgeführt. Dadurch wird unterhalb der Dekoriervorrichtung 7 zwischen zwei oberen Umlenkprofilen 4, 5 ein Dekorierspalt 6 ausgebildet. Mittels weiterer Umlenkrollen (in der Figur 1 nicht gezeigt) wird das Gitterband 1 um den Auffangtrog herum geführt. Somit wird über dem Spalt 6 dekoriert, während eventuell am Gitterband 1 verbliebene Überzugsmasse um den Auffangtrog 2 herum geführt wird und somit lediglich in den ersten Auffangbehälter, der darunter angeordnet sein kann, tropfen kann. Zusätzlich hierzu können unterhalb des Gitterbands 1 und oberhalb des Auffangtrogs 2 Platten vorgesehen sein, die von dem umgelenkten Gitterband 1 herabtropfende Überzugsmasse auffangen und durch ihre Neigung in den Auffangbehälter der Überzugsmasse leiten. Eine Vermischung beider Massen wird dadurch vermieden.

Um die Vorrichtung an verschiedene Produktgrößen anpassen zu können, kann die Größe des Spalts 6 einstellbar sein. Hierfür können die oberen Umlenkprofile 4 und 5 mit einer Einstelleinheit verbunden sein. Das erste Umlenkprofil 4 bezeichnet hier das in Produktionsrichtung dem zweiten Umlenkprofil 5 vorgelagerte Element. Die Umlenkprofile 4, 5 können jeweils horizontal verstellt werden. Je kleiner die Produkte 3 sind, desto schwieriger wird es, sie von einer produktzuführenden Bandseite auf eine produktabführende Bandseite zu übergeben. Da die Produkte 3 ab der Spaltmitte nach unten kippen, kann die Spaltgröße 6 zusätzlich in vertikaler Richtung verändert werden. Dadurch, dass man auslaufseitig das Umlenkprofil 5 tiefer stellt, kann man etwas näher an das einlaufseitige Umlenkprofil 4 herankommen, um ein Abstürzen der Produkte 3 zu verhindern und dennoch mit einem Spalt 6 arbeiten zu können. So können die Produkte 3 sicher von einem produktzuführenden Bandteil auf ein produktabführendes Bandteil weiter transportiert werden. Hierfür sind vertikale Verstellungen 41, 51 und horizontale Verstellungen 42, 52 vorgesehen. Diese können beispielhaft manuell mittels Kreuzgriffen 9 bedient werden. Die manuelle Verstellung kann auch durch eine automatische Verstellung, beispielsweise mit Elektro- oder Servomotoren, ersetzt werden. Die horizontale Verstellbarkeit kann dabei etwa 5-30 mm betragen. Die vertikale Verstellbarkeit kann etwa bis zu 6 mm betragen. Auch andere Bereiche für die Verstellbarkeit können je nach Produktgröße zweckdienlich sein. Dabei ist eine vertikale Verstellung relevanter auf der Auslaufseite, um - besonders, aber nicht nur - für kleinere Produkte 3 ein Kippen der Produkte über bzw. in den Spalt 6 abzufangen und so den Übergang über den Spalt 6 besser gestalten zu können, sowie die Gefahr des Verlusts des Produkts 3 durch Herabfallen oder der Beschädigung zu vermindern.

Die Verstellung der Umlenkprofile 4, 5 wird ohne ein Verkippen der Umlenkprofile, also lediglich durch horizontale bzw. vertikale Verschiebung, durchgeführt. Es kann allerdings auch ein Verkippen der Umlenkprofile 4, 5 zweckdienlich sein.

Durch eine Verstellbarkeit der Spaltgröße 6 kann bei einem Produktwechsel eine schnelle Anpassung erfolgen, ohne dass Fachpersonal bei Stillstand der Maschine Umbauten vornehmen muss. Die horizontalen 42, 52 und vertikalen Verstellungen 41, 51 gewährleisten eine hohe Flexibilität und die Möglichkeit der Anpassung der Spaltgröße 6 im Betrieb.

Um eine geringe Kontamination der fließfähigen Massen untereinander sicherzustellen, sollte die horizontale Spaltgröße 6 möglichst groß gewählt sein. Dadurch steigt jedoch die Gefahr, dass Produkte 3 an dem Spalt 6 beschädigt werden oder in den Trog 2 fallen. Um dies zu verhindern, sollte andererseits die Spaltgröße 6 möglichst klein sein. Für kleinere Produkte 3 sollte zusätzlich ein vertikaler Versatz eingestellt sein, damit eine Kippbewegung der Produkte und ein Stürzen in den Auffangtrog 2 vermieden werden kann. Somit muss eine Abwägung zwischen Produktsicherheit, d.h. Freiheit von Beschädigungen und Vermeiden eines Verlusts von Produkten 3 auf der einen und der Vermischung der Überzugsmassen auf der anderen Seite getroffen werden.

Figur 2 zeigt eine Perspektivansicht der Vorrichtung gemäß Figur 1 bei geschlossenem Spalt 6. Aus Gründen der Übersichtlichkeit wurde hier auf die Darstellung der Dekoriervorrichtung 7 verzichtet. Das Produkt 3 fährt über das Gitterband 1. Diese Einstellung kann beispielsweise gewählt werden, wenn keine Dekorierung des Produkts 3 vorgenommen wird, oder die Dekoriermasse mit der Überzugsmasse übereinstimmt.

Das Gitterband 1 weist eine produktzuführende Seite 18 und eine produktabführende Seite 19 auf. Anstelle eines umlaufenden Bands 1 können auch zwei getrennte Bänder 18, 19 verwendet werden, die jeweils an den Umlenkrollen 4 bzw. 5 umgelenkt werden und wie oben beschrieben verstellt werden können. Auch die Position des Auffangtrogs 2 bleibt unverändert. Die Bänder 18, 19 können beispielsweise mittels eines Riemenantriebs synchron betrieben werden. Dieser Aufbau mit zwei getrennten Transport- bzw. Gitterbändern 18, 19 kann auf alle erfindungsgemäßen Ausführungsformen wie in den Figuren 1 bis 8 gezeigt angewendet werden. Dies kann dazu beitragen, den Verschleiß zu verringern, da weniger Umlenkpunkte benötigt werden.

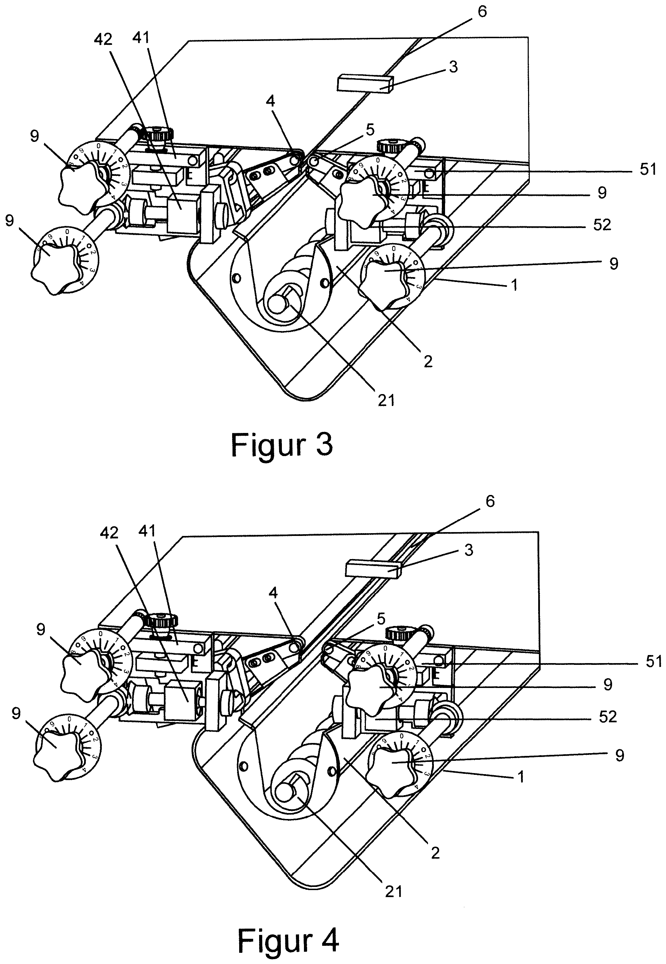

Figur 3 zeigt eine Perspektivansicht der Vorrichtung bei geringfügig geöffnetem Spalt 6. Dies wurde durch Betätigung der ersten horizontalen Verstellung 42 und/oder der zweiten horizontalen Verstellung 52 erreicht. Die horizontale Verstellung kann beispielsweise durch eine Umlenkung der Drehbewegung an dem Rad der horizontalen Verstellung 42, 52 über Kegelräder auf eine Gewindespindel erfolgen, die das Umlenkprofil 4, 5 verschiebt. Auch andere mechanische Elemente oder Getriebearten oder das direkte Anbringen eines Motors an einer Gewindespindel o.ä. können Möglichkeiten sein, die Umlenkprofile 4, 5 zu verschieben, um die Spaltgröße 6 einzustellen. Bei einem geöffneten Spalt 6 kann nun die Dekoriervorrichtung 7 wie in Figur 1 gezeigt über dem Spalt 6 die zweite fließfähige Masse auf das Produkt 3 aufbringen. Die überschüssige Masse tropft somit nicht in den Auffangbehälter der Überzugsmasse, sondern wird im Auffangtrog 2 gesammelt und kann rezirkuliert werden. Dadurch wird eine Vermischung beider Massen vermieden.

Figur 4 zeigt eine Perspektivansicht der Vorrichtung bei im Vergleich zu Figur 3 etwas weiter geöffnetem Spalt 6. Auch hier wurde lediglich eine horizontale Verschiebung der Umlenkprofile 4, 5 vorgenommen.

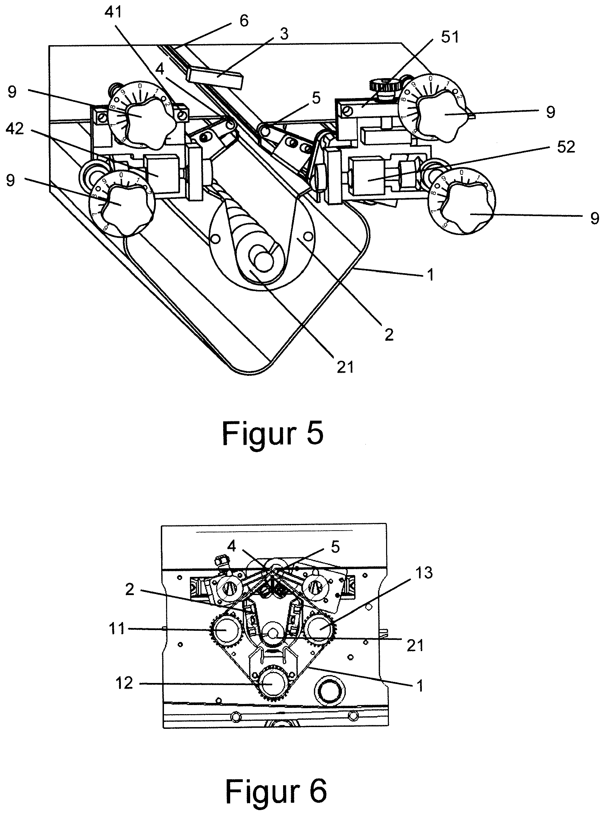

Figur 5 zeigt eine Perspektivansicht der Vorrichtung, wobei auf der Auslaufseite zusätzlich zur horizontalen Verschiebung beider Umlenkprofile 4, 5 das zweite Umlenkprofil 5, d.h. auslaufseitig, vertikal nach unten verschoben wurde. Dadurch kann beim Überfahren des Spalts 6 eine Kippbewegung des Produkts 3, beispielsweise aufgrund von Haftung am Gitterband 1, abgefangen werden. Dies ist, wie bereits oben erwähnt, besonders für kleine Produkte 3 hilfreich, da mit einem Spalt 6 das Risiko des Verlusts von Produkten minimiert wird. Der vertikale Versatz der Umlenkprofile 4, 5 zueinander kann dabei beispielsweise durch eine Gewindespindel, die über ein Schneckengetriebe mit dem Einstellrad verbunden ist, gesteuert werden. Auch hier können alternativ zur manuellen Einstellung Elektro- oder Servomotoren zum Einsatz kommen oder andere Getriebearten zweckdienlich sein.

Figur 6 ist eine schematische Seitenansicht der Vorrichtung bei geschlossenem Spalt. Aus Gründen der Übersichtlichkeit ist die Dekoriervorrichtung 7 nicht gezeigt.

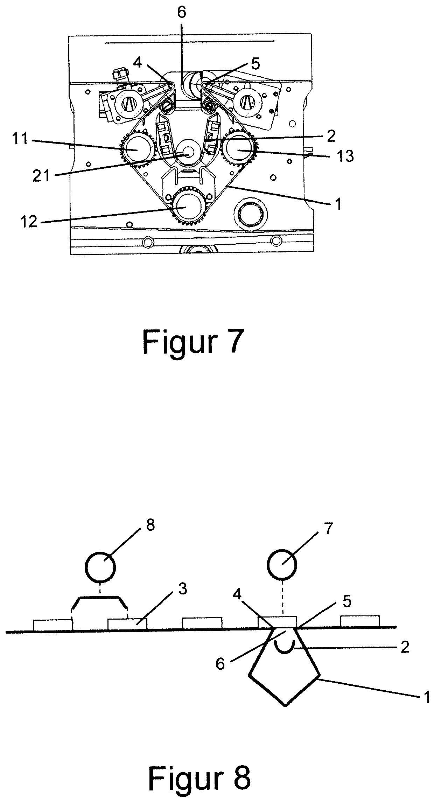

Figur 7 ist eine schematische Seitenansicht der Vorrichtung bei geöffnetem Spalt. Auch hier ist die über dem Spalt 6 angebrachte Dekoriervorrichtung 7 nicht gezeigt. In den Figuren 6 und 7 sind die Umlenkprofile 4, 5, die dazu dienen, den Spalt 6 über dem Auffangtrog 2 zu bilden, und ferner die Umlenkrollen 11, 12 und 13 zum Führen des Gitterbands 1 um den Trog 2 herum gezeigt.

Figur 8 zeigt eine schematische Ansicht einer Vorrichtung und das Verfahren zum Überziehen und Dekorieren gemäß einer Ausführungsform der Erfindung. Die Produkte 3 werden auf dem Gitterband 1 transportiert und von der Überzugsvorrichtung 8 zunächst mit einer ersten fließfähigen Masse überzogen. Das Gitterband 1 wird um den Auffangtrog 2 für die Dekoriermasse unterhalb der Dekoriervorrichtung 7 herumgeführt, so dass ein Spalt 6 entsteht und die überschüssige Überzugsmasse nicht in den Auffangtrog 2 tropft und sich dort mit der Dekoriermasse vermengt. Die überzogenen Produkte 3 überfahren den Spalt 6 und werden dort von der Dekoriervorrichtung 7 mit der zweiten fließfähigen Masse, der Dekoriermasse, überzogen. Die überschüssige Dekoriermasse tropft unterhalb des Spalts 6 in den Auffangtrog 2 und kann rezirkuliert und so für die nächsten Dekoriervorgänge verwendet werden.

Anstelle der Umlenkung des Transportbands um den Auffangtrog können auch zwei separate Transportbänder vorgesehen sein, zwischen denen ein Spalt ausgebildet ist. Um einen Synchronlauf zu gewährleisten, können beide Transportbänder beispielsweise mit einem Riemenantrieb verbunden sein.

Durch die erfindungsgemäß getrennten Auffangbehälter für überschüssige Überzugs- bzw. Dekoriermasse sowie dem Dekorieren über einem Spalt ist es möglich, eine Vermischung von Überzugsmasse und Dekoriermasse effizient zu verhindern. Dadurch ist kein erzwungenes Austauschen der Masse aufgrund von Kontamination durch die jeweils andere Masse notwendig. Somit ist die Produktion ressourcenschonend und die Stillstandszeit der Maschine aufgrund von Reinigung oder Austausch der Dekorier- bzw. Überzugsmasse kann minimiert werden.

Durch die optionale Spalteinstellung kann die Produktionslinie ferner, ohne die Maschine stoppen zu müssen, an verschiedene Produkte bzw. Produktgrößen angepasst werden. Die horizontale Verstellbarkeit gewährleistet, dass die Dekoriermasse nicht auf das Transportband gerät und sich mit der Überzugsmasse vermischt, während die vertikale Verstellbarkeit es erlaubt, auch kleine Produkte beschädigungs- und verlustfrei über den Spalt zu transportieren.

Die Erfindung kann für alle Produktionslinien mit Gitterband oder einem ähnlichen Transportmedium und zwei oder mehr Einheiten zum Überziehen der Produkte "nass in nass" verwendet werden.

### Liste der Bezugszeichen

- 1: Gitterband
- 18: Produktzuführende Bandseite
- 19: Produktabführende Bandseite
- 2: Zweiter Auffangtrog
- 21: Austragschnecke
- 3: Produkt
- 4: Erstes Umlenkprofil
- 41: Vertikale Verstellung des ersten Umlenkprofils
- 42: Horizontale Verstellung des ersten Umlenkprofils
- 5: Zweites Umlenkprofil
- 51: Vertikale Verstellung des zweiten Umlenkprofils
- 52: Horizontale Verstellung des zweiten Umlenkprofils
- 6: Spalt
- 7: Dekoriervorrichtung
- 8: Überzugsvorrichtung
- 9: Kreuzgriff
- 11, 12, 13: Umlenkrollen

## Patentansprüche

1. Vorrichtung zum Dekorieren von mit einer ersten fließfähigen Masse überzogenen Produkten (3) mit mindestens einer zweiten fließfähigen Masse, wobei die Vorrichtung aufweist:
ein Transportband (1) zum Transport der Produkte (3),
eine Einheit (7) zum Verteilen der zweiten fließfähigen Masse auf den Produkten (3) und
einen Auffangbehälter (2) für die zweite fließfähige Masse, der unterhalb der Einheit (7) angeordnet ist,
mehrere Umlenkeinrichtungen (4, 5, 11, 12, 13) zum Führen des Transportbands (1) im Bereich des Auffangbehälters (2),
wobei mittels zwei oberen Umlenkeinrichtungen (4, 5) der mehreren Umlenkeinrichtungen das Transportband (1) derart umgelenkt wird, dass ein verstellbarer Spalt (6) unter der Einheit (7) und über dem Auffangbehälter (2) gebildet wird, **gekennzeichnet dadurch, dass**
das Transportband (1) mittels der mehreren Umlenkeinrichtungen (4, 5, 11, 12, 13) um den Auffangbehälter (2) herum gelenkt wird.

2. Vorrichtung gemäß Anspruch 1, wobei die Spaltgröße (6) durch horizontale Verschiebung mindestens einer der oberen Umlenkeinrichtungen (4, 5) und/oder durch vertikale Verschiebung mindestens einer der oberen Umlenkeinrichtungen (4, 5) eingestellt werden kann.

3. Vorrichtung gemäß einem der vorstehenden Ansprüche, wobei die horizontale Verschiebung mittels Kegelrädern, die eine Drehbewegung eines Griffs (9) auf eine an der oberen Umlenkeinrichtung (4, 5) angebrachte Gewindespindel übertragen, erfolgt.

4. Vorrichtung gemäß einem der vorstehenden Ansprüche, wobei die vertikale Verschiebung mittels eines Schneckengetriebes, das eine Drehbewegung eines Griffs (9) auf eine an der oberen Umlenkeinrichtung (4, 5) angebrachte Gewindespindel überträgt, erfolgt.

5. Vorrichtung gemäß einem der vorstehenden Ansprüche, wobei ein Bereich der horizontalen Verschiebung 5 bis 30 mm beträgt und/oder
wobei ein Bereich der vertikalen Verschiebung 6 mm beträgt.

6. Vorrichtung gemäß einem der vorstehenden Ansprüche, wobei im Auffangbehälter (2) eine Austragsschnecke (21) angebracht ist.

7. Vorrichtung gemäß einem der vorstehenden Ansprüche, wobei mindestens eine der fließfähigen Massen eine fetthaltige Masse aufweist.

8. Vorrichtung gemäß einem der vorstehenden Ansprüche, wobei die Vorrichtung ferner
eine der Einheit (7) zum Verteilen der zweiten fließfähigen Masse in Produktionsrichtung vorgelagerte erste Einheit (8) zum Verteilen der ersten fließfähigen Masse auf den Produkten (3), und
einen unterhalb des Transportbands (1) angeordneten Auffangbehälter für die erste fließfähige Masse aufweist.

9. Verfahren zum Dekorieren von mit einer ersten fließfähigen Masse überzogenen Produkten (3) mit mindestens einer zweiten fließfähigen Masse, wobei ein bereits mit der ersten fließfähigen Masse überzogenes Produkt auf einem Transportband (1) unter einer Einheit (7) zum Verteilen der zweiten fließfähigen Masse hindurch geführt wird, wobei unterhalb der Einheit (7) ein Auffangbehälter (2) für die zweite fließfähige Masse angeordnet ist, **dadurch gekennzeichnet, dass** ein Spalt (6) auf die Produktabmessungen eingestellt wird, und das Produkt (3) im Bereich des Auffangbehälters (2) über den Spalt (6) geführt wird, wobei der Spalt (6) unter der Einheit (7) und über dem Auffangbehälter (2) durch Umlenken des Transportbands (1) mittels zwei oberer Umlenkeinrichtungen (4, 5) von mehreren Umlenkeinrichtungen (4, 5, 11, 12, 13) , welche das Transportband um den Auffangbehälter (2) herum lenken, gebildet wird.

## Claims

1. A device for decorating products (3) coated with a first flowable mass with at least a second flowable mass, the device comprising:
a conveyor belt (1) for transporting the products (3),
a unit (7) for distributing the second flowable mass on the products (3), and
a collection container (2) for the second flowable mass, which is arranged below the unit (7),
a plurality of deflection means (4, 5, 11, 12, 13) for guiding the conveyor belt (1) in the area of the collection container (2),
wherein, by means of two upper deflection means (4, 5) of the plurality of deflection means, the conveyor belt (1) is deflected in such a way that an adjustable gap (6) is formed below the unit (7) and above the collection container (2),
**characterized in that**
the conveyor belt (1) is directed around the collection container (2) by means of the plurality of deflection means (4, 5, 11, 12, 13).

2. The device according to claim 1, wherein the gap size (6) can be adjusted by horizontal displacement of at least one of the upper deflection means (4, 5) and/or by vertical displacement of at least one of the upper deflection means (4, 5).

3. The device according to any one of the preceding claims, wherein the horizontal displacement is performed by means of bevel gears transmitting a rotary motion of a handle (9) to a threaded spindle mounted on the upper deflection means (4, 5).

4. The device according to any one of the preceding claims, wherein the vertical displacement is performed by means of a worm gear transmitting a rotary motion of a handle (9) to a threaded spindle mounted on the upper deflection means (4, 5).

5. The device according to any one of the preceding claims, wherein a range of the horizontal displacement is 5 to 30 mm and/or
wherein a range of the vertical displacement is 6 mm.

6. The device according to any one of the preceding claims, wherein a discharge screw (21) is mounted in the collection container (2).

7. The device according to any one of the preceding claims, wherein at least one of the flowable masses comprises a fat-containing mass.

8. The device according to any one of the preceding claims, wherein the device further comprises
a first unit (8), upstream of the unit (7) for distributing the second flowable mass in the production direction, for distributing the first flowable mass on the products (3), and
a collection container for the first flowable mass arranged below the conveyor belt (1).

9. A method for decorating products (3) coated with a first flowable mass with at least one second flowable mass, wherein a product already coated with the first flowable mass is guided on a conveyor belt (1) under a unit (7) for distributing the second flowable mass, wherein a collection container (2) for the second flowable mass is arranged below the unit (7), **characterized in that** a gap (6) is adjusted to the product dimensions, and the product (3) is guided over the gap (6) in the region of the collection container (2), wherein the gap (6) is formed below the unit (7) and above the collection container (2) by deflecting the conveyor belt (1) by means of two upper deflection means (4, 5) of a plurality of deflection means (4, 5, 11, 12, 13), which guide the conveyor belt around the collection container (2).

## Revendications

1. Dispositif pour la décoration de produits (3) revêtus d'une première masse fluide avec au moins une deuxième masse fluide, ledit dispositif comprenant :
une bande transporteuse (1) pour le transport des produits (3),
une unité (7) de répartition de la deuxième masse fluide sur les produits (3) et
un récipient de collecte (2) pour la deuxième masse fluide, disposé en dessous de l'unité (7),
plusieurs dispositifs de déviation (4, 5, 11, 12, 13) pour le guidage de la bande transporteuse (1) au niveau du récipient de collecte (2),
où, au moyen de deux dispositifs de déviation supérieurs (4, 5) des plusieurs dispositifs de déviation, la bande transporteuse (1) est déviée de manière qu'une fente (6) réglable est formée sous l'unité (7) et au-dessus du récipient de collecte (2), **caractérisé en ce que** la bande transporteuse (1) est déviée tout autour du récipient de collecte (2) au moyen des plusieurs dispositifs de déviation (4, 5, 11, 12, 13).

2. Dispositif selon la revendication 1, où la grandeur de fente (6) peut être réglée par déplacement horizontal d'au moins un des dispositifs de déviation supérieurs (4, 5) et/ou par déplacement vertical d'au moins un des dispositifs de déviation supérieurs (4, 5).

3. Dispositif selon l'une des revendications précédentes, où le déplacement horizontal est effectué au moyen de roues coniques transmettant un mouvement rotatif d'une manette (9) à une tige filetée montée sur le dispositif de déviation supérieur (4, 5).

4. Dispositif selon l'une des revendications précédentes, où le déplacement vertical est effectué au moyen d'une vis sans fin transmettant un mouvement rotatif d'une manette (9) à une tige filetée montée sur le dispositif de déviation supérieur (4, 5).

5. Dispositif selon l'une des revendications précédentes, où une plage de déplacement horizontal est de 5 à 30 mm et/ou
où une plage de déplacement vertical est de 6 mm.

6. Dispositif selon l'une des revendications précédentes, où une vis d'extraction (21) est montée dans le récipient de collecte (2).

7. Dispositif selon l'une des revendications précédentes, où au moins une des masses fluides comprend une masse à teneur en graisse.

8. Dispositif selon l'une des revendications précédentes, où ledit dispositif comprend en outre une première unité (8) pour la répartition de la première masse fluide sur les produits (3), en amont de l'unité (7) pour la répartition de la deuxième masse fluide dans la direction de production, et
un récipient de collecte pour la première masse fluide disposé en dessous de la bande transporteuse (1).

9. Procédé de décoration de produits (3) revêtus d'une première masse fluide avec au moins une deuxième masse fluide, où un produit déjà revêtu de la première masse fluide est conduit sur une bande transporteuse (1) sous une unité (7) pour la répartition de la deuxième masse fluide, où un récipient de collecte (2) pour la deuxième masse fluide est disposé en dessous de l'unité (7), **caractérisé en ce qu'**une fente (6) est réglée aux dimensions du produit, et **en ce que** le produit (3) est guidé par la fente (6) au niveau du récipient de collecte (2), la fente étant formée (6) sous l'unité (7) et au-dessus du récipient de collecte (2) par déviation de la bande transporteuse (1) au moyen de deux dispositifs de déviation supérieurs (4, 5) de plusieurs dispositifs de déviation (4, 5, 11, 12, 13), lesquels dévient la bande transporteuse tout autour du récipient de collecte (2).
